# EUROPÄISCHE PATENTSCHRIFT

(11) **EP 4 310 139 B1**
(45) Veröffentlichungstag und Bekanntmachung des Hinweises auf die Patenterteilung: **21.01.2026**
(21) Anmeldenummer: 23183018.3
(22) Anmeldetag: 03.07.2023
(51) Int. Cl.: C08L 9/00, B60C 1/00, C08L 7/00, C08L 15/00, C08K 5/103, C08K 3/36

(54) **KAUTSCHUKMISCHUNG UND REIFEN**
RUBBER COMPOSITION AND TIRE
MÉLANGE DE CAOUTCHOUC ET PNEU

(30) Priorität: 18.07.2022 DE 102022207319; 26.09.2022 DE 102022210154
(43) Veröffentlichungstag der Anmeldung: 24.01.2024
(73) Patentinhaber: Continental Reifen Deutschland GmbH, 30175 Hannover (DE)
(72) Erfinder: Schax, Fabian, 30165 Hannover (DE); Müller, Norbert, 30165 Hannover (DE); Stark, Anette, 30165 Hannover (DE)
(74) Vertreter: Continental Corporation

(56) Entgegenhaltungen:
- EP-A1- 3 103 654
- US-A1- 2019 309 146
- US-A1- 2021 354 512

## Beschreibung

Die Erfindung betrifft eine schwefelvernetzbare Kautschukmischung, insbesondere für den Laufstreifen von Fahrzeugluftreifen.

Die Erfindung betrifft ferner einen Fahrzeugluftreifen mit einem Laufstreifen, der zumindest zum Teil aus einer solchen, mit Schwefel vulkanisierten Kautschukmischung besteht.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche unternommen, die Eigenschaften des Reifens durch die Variation der Polymerkomponenten, der Füllstoffe und der sonstigen Zuschlagstoffe in der Laufstreifenmischung positiv zu beeinflussen. Dabei muss man berücksichtigen, dass eine Verbesserung in der einen Reifeneigenschaft oft eine Verschlechterung einer anderen Eigenschaft mit sich bringt, so ist beispielsweise eine Verbesserung des Abriebverhaltens üblicherweise mit einer Verschlechterung des Bremsverhaltens auf trockener Fahrbahn verbunden. An Laufstreifenmischungen für PKW- und Van-Reifen werden zum Beispiel höchste Anforderungen hinsichtlich des Nass- und Trockenbremsens, des Abriebwiderstands, des Cut-und-Chip-Verhaltens, des Rollwiderstands, der Haltbarkeit und des Handlings gestellt.

Um Reifeneigenschaften wie Abrieb, Nassrutschverhalten und Rollwiderstand zu beeinflussen, ist es z. B. bekannt, lösungspolymerisierte Styrol-Butadien-Copolymere mit unterschiedlicher Mikrostruktur einzusetzen. Außerdem lassen sich Dienkautschuke modifizieren, indem Endgruppenmodifizierungen, Kopplungen oder Hydrierungen vorgenommen werden. Die verschiedenen Copolymertypen haben unterschiedlichen Einfluss auf die Vulkanisat- und damit auch auf die Reifeneigenschaften.

Funktionalisierte Dienelastomere für kieselsäurehaltige Kautschukmischungen für Reifen werden beispielsweise in der EP 3 150 403 A1, der EP 3 150 402 A1, der EP 3 150 401 A1, der DE 10 2015 218 745 A1 und der DE 10 2015 218 746 A1 beschrieben.

Ferner werden in der US 2021347206 A1 und der US 2021230403 A1 Kautschukmischungen für Reifenlaufstreifen beschrieben, die Butadienkautschuk (Polybutadien, BR) mit einem geringen cis-Anteil aufweisen.

Für eine Verbesserung des Gleichgewichtes aus Haltbarkeit und Hystereseeigenschaften von Kautschukmischungen für Reifenlaufstreifen offenbart die WO 2020218601 A1 Mischungen mit 70 phr Styrol-Butadien-Copolymer (SSBR), 30 phr high-cis Butadienkautschuk (Polybutadien, BR), Kieselsäure, pflanzlichem Öl, Harz und 3,3'-Bis(triethoxysilylpropyl)tetrasulfid (TESPT) als Silan-Kupplungsagens.

Der Erfindung liegt die Aufgabe zugrunde, Kautschukmischungen für die Laufstreifen von Fahrzeugluftreifen bereitzustellen, die bei Reifen zu einem verbesserten Rollwiderstand bei gleichzeitig guten Handlingverhalten und niedrigem Abrieb führen.

Gelöst wird diese Aufgabe erfindungsgemäß durch eine schwefelvernetzbare Kautschukmischung, insbesondere für den Laufstreifen von Fahrzeugluftreifen, die wenigstens folgende Bestandteile enthält:
- 50 bis 100 phr (Gewichtsteile, bezogen auf 100 Gewichtsteile der gesamten Kautschuke in der Mischung) zumindest eines festen, lösungspolymerisierten Butadienkautschuks (BR) mit einem cis-Anteil von weniger als 90 Gew.-%,
- bis zu 20 phr zumindest eines natürlichen Polyisoprens (NR),
- bis zu 40 phr zumindest eines lösungspolymerisierten Styrol-Butadien-Kautschuks (SSBR),
- 5 bis 50 phr zumindest eines Weichmachers, der kein Mineralölweichmacher ist, und
- 10 bis 300 phr zumindest einer Kieselsäure.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen festen Kautschuke bezogen.

Überraschenderweise hat sich herausgestellt, dass die spezielle Kombination von einem festen, lösungspolymerisierten Butadienkautschuks (BR, Polybutadien) mit einem cis-Anteil von weniger als 90 Gew.-% mit 5 bis 50 phr zumindest eines Weichmachers, der kein Mineralölweichmacher ist, in kieselsäurehaltigen Mischungen zu einem verringertem Verlustfaktor tan δ (10 %) aus RPA-Messung *(= engl.* "rubber process analyzer") an der konditionierten Probe in Anlehnung an ASTM D6601 führt. Dieser verringerte Verlustfaktor tan δ (10 %) lässt sich bei der Anwendung der Mischung in Reifenlaufstreifen mit einem verringerten Rollwiderstand korrelieren. Gleichzeitig verbleibt der dynamische Speichermodul E' bei 8 % Dehnung aus dynamisch-mechanischer Messung bei 55 °C gemäß DIN 53 513 auf hohem Niveau, was sich mit einer hohen Steifigkeit und somit beim Reifenlaufstreifen mit einem guten Handlingverhalten korrelieren lässt. Auch der Abrieb bleibt auf niedrigem Niveau.

Die Kautschukmischung enthält 50 bis 100 phr zumindest eines festen, lösungspolymerisierten Butadienkautschuks (BR) mit einem cis-Anteil von weniger als 90 Gew.-%, vorzugsweise mit einem cis-Anteil zwischen 20 und 50 Gew.-%. Es können auch mehrere lösungspolymerisierte Butadienkautschuke eingesetzt werden.

Als Butadienkautschuk (Polybutadien, BR) können alle dem Fachmann bekannten Typen eingesetzt werden, die einen cis-Anteil von weniger als 90 Gew.-% aufweisen. Darunter fallen die sogenannten low-cis-Typen, wobei Butadienkautschuk mit einem cis-Anteil kleiner als 90 Gew.-% als low-cis-Typ bezeichnet wird. Vorzugsweise wird ein low-cis- Butadienkautschuk mit einem cis-Anteil zwischen 20 bis 50 Gew.-%, z. B. Li-BR (Lithium-katalysierter ButadienKautschuk), eingesetzt.

Die lösungspolymerisierten, funktionalisierten Butadienkautschuke sind gemäß einer bevorzugten Weiterbildung der Erfindung mit einer Gruppe funktionalisiert ist, die eine Wechselwirkung mit der Kieselsäure ermöglicht. Die Butadienkautschuke können dabei mit unterschiedlichsten Funktionalisierungen (Modifizierungen), die eine Wechselwirkung mit der Kieselsäure ermöglichen, endgruppenmodifiziert und/oder entlang der Polymerketten funktionalisiert sein. Bei der Funktionalisierung kann es sich um solche mit Hydroxy-Gruppen und/oder Ethoxy-Gruppen und/oder Epoxy-Gruppen und/oder Siloxan-Gruppen und/oder Aminosiloxan- und/oder Carboxy-Gruppen und/oder Silan-Sulfid-Gruppen handeln. Es kommen aber auch weitere, der fachkundigen Person bekannte Modifizierungen bzw. Funktionalisierungen in Frage. Es können auch unterschiedlichen Funktionalisierungen an beiden Kettenenden vorgesehen sein. Bestandteil der Funktionalisierungen können auch Metallatome sein.

Der Butadienkautschuk kann neben den Funktionalisierungen, die eine Wechselwirkung mit Kieselsäure ermöglichen, auch weitere Funktionalisierungen, die Wechselwirkungen mit unpolaren Füllstoffen, wie Ruß, ermöglichen, aufweisen.

Die erfindungsgemäße Kautschukmischung enthält bis zu 20 phr zumindest eines natürlichen Polyisoprens (Naturkautschuk, NR). Natürliches Polyisopren wird verstanden als Kautschuk, der durch Ernte von Quellen wie Kautschukbäumen (Hevea brasiliensis) oder nicht-Kautschukbaumquellen (wie z. B. Guayule oder Löwenzahn (z. B. Taraxacum koksaghyz)) gewonnen werden kann. Unter natürlichem Polyisopren (NR) wird nicht synthetisches Polyisopren verstanden. Natürliche Polyisoprene aus verschiedenen Quellen können auch im Verschnitt eingesetzt werden. Der cis-1,4-Anteil im natürlichen Polyisopren ist größer 99 Gew.-%.

Die erfindungsgemäße Kautschukmischung enthält bis zu 40 phr zumindest eines lösungspolymerisierten Styrol-Butadien-Kautschuks (SSBR). Die Styrol-ButadienKautschuke können dabei mit unterschiedlichsten Funktionalisierungen (Modifizierungen), die eine Wechselwirkung mit der Kieselsäure ermöglichen, endgruppenmodifiziert und/oder entlang der Polymerketten funktionalisiert sein. Bei der Funktionalisierung kann es sich um solche mit Hydroxy-Gruppen und/oder Ethoxy-Gruppen und/oder Epoxy-Gruppen und/oder Siloxan-Gruppen und/oder Aminosiloxan- und/oder Carboxy-Gruppen und/oder Silan-Sulfid-Gruppen handeln. Es kommen aber auch weitere, der fachkundigen Person bekannte Modifizierungen bzw. Funktionalisierungen in Frage. Es können auch unterschiedlichen Funktionalisierungen an beiden Kettenenden vorgesehen sein. Bestandteil der Funktionalisierungen können auch Metallatome sein.

Neben den bereits genannten Kautschuktypen kann die Kautschukmischung ggf. weitere Dienelastomere wie synthetisches Polyisopren und/oder high-cis-Butadienkautschuke und/oder emulsionspolymerisierte Styrol-ButadienKautschuke und/oder Styrol-Isopren-Kautschuke und/oder Halobutyl-Kautschuke und/oder Polynorbornene und/oder Isopren-Isobutylen-Copolymere und/oder Ethylen-Propylen-Dien-Kautschuke handeln. Die Kautschuke können als reine Kautschuke oder in ölverstreckter Form eingesetzt werden.

Für einen besonders niedrigen Rollwiderstand beim Einsatz als Reifenlaufstreifen hat es sich als vorteilhaft erwiesen, wenn die Kautschukmischung zumindest
- 60 bis 95 phr zumindest eines festen, lösungspolymerisierten Butadienkautschuks (BR) mit einem cis-Anteil von weniger als 90 Gew.-%,
- 5 bis 15 phr zumindest eines natürlichen Polyisoprens (NR) und
- 10 bis 30 phr zumindest eines lösungspolymerisierten Styrol-Butadien-Kautschuks (SSBR) enthält.

Für ein besonders ausgewogenes Verhältnis zwischen Abrieb und Rollwiderstand beim Einsatz als Reifenlaufstreifen ist es gemäß einer alternativen Ausführungsform von Vorteil, wenn die Kautschukmischung
- 80 bis 100 phr zumindest eines festen, lösungspolymerisierten Butadienkautschuks (BR) mit einem cis-Anteil von weniger als 90 Gew.-%,
- bis zu 20 phr zumindest eines natürlichen Polyisoprens (NR) und
- bis zu 10 phr zumindest eines lösungspolymerisierten Styrol-Butadien-Kautschuks (SSBR) enthält.

Besonders bevorzugt ist es bei dieser Alternative, wenn die Kautschukmischung im Wesentlichen frei von lösungspolymerisierten Styrol-Butadien-Kautschuken (SSBR) ist.

Um die Reifeneigenschaften weiter zu verbessern, weisen die Kautschuke in der Mischung zusammen eine Blend-Glasübergangstemperatur Tg_{(blend)} von -90 bis -77 °C auf. Die Blend-Glasübergangstemperatur Tg_{(blend)} ergibt dabei aus den Glasübergangstemperaturen der einzelnen Kautschuke und deren Anteilen am Blend. Die Bestimmung der Glasübergangstemperatur (Tg) der Polymere erfolgt anhand von Dynamischer Differenz-Kalorimetrie (engl. Dynamic Scanning Calorimetry, DSC gemäß DIN 53765: 1994-03 bzw. ISO 11357-2: 1999-03, Kalibrierte DSC mit Tieftemperatureinrichtung, Kalibrierung nach Gerätetyp und Herstellerangaben, Probe im Aluminiumtiegel mit Aluminiumdeckel, Abkühlung auf Temperaturen niedriger als -120 °C mit 10 °C/min).

Die erfindungsgemäße Kautschukmischung enthält 5 bis 50 phr, vorzugsweise 5 bis 30 phr, zumindest eines Weichmachers, der kein Mineralölweichmacher ist. Es ist möglich, einen Weichmacher oder mehrere Weichmacher in Kombination einzusetzen.

Als Weichmacher, die keine Mineralölweichmacher sind, können unterschiedlichste Weichmacher, wie pflanzliche Öle, Faktisse oder Flüssig-Polymere eingesetzt werden. Der oder die Weichmacher werden bei der Herstellung der erfindungsgemäßen Kautschukmischung bevorzugt in wenigstens einer Grundmischstufe zugegeben.

Gemäß einer vorteilhaften Weiterbildung der Erfindung wird als Weichmacher ein pflanzliches Öl eingesetzt. Dies ist aus ökologischer und ökonomischer Sicht von Vorteil und bietet in Reifen vorteilhafte Eigenschaften. Besonders bevorzugt ist, wenn das pflanzliche Öl Rapsöl ist.

Als Weichmacher kann auch ein flüssiges Polymer, beispielsweise ein flüssiges Dien-Polymer, wie flüssiges Polybutadien, eingesetzt werden. Das flüssige Polymer ist vorzugsweise gut mit den üblichen Kautschuktypen einer Laufstreifenmischung kompatibel und zeigt eine geringe Diffusionsneigung.

In der Kautschukmischung können neben den vorgenannten Weichmachern auch Mineralölweichmacher enthalten sein. Als Mineralölweichmacher können alle dem Fachmann bekannten Mineralölweichmacher wie aromatische, naphthenische oder paraffinische Mineralölweichmacher, wie z.B. MES (mild extraction solvate) oder RAE (Residual Aromatic Extract) oder TDAE (treated distillate aromatic extract), bevorzugt mit einem Gehalt an polyzyklischen Aromaten von weniger als 3 Gew.-% gemäß Methode IP 346, eingesetzt werden. Vorzugsweise ist die erfindungsgemäße Kautschukmischung jedoch frei von Mineralölweichmachern.

Die erfindungsgemäße Kautschukmischung enthält 10 bis 300 phr, bevorzugt 50 bis 200 phr, Kieselsäure, um eine gute Verarbeitbarkeit bei guten Reifeneigenschaften zu erzielen.

Es können unterschiedlichste Kieselsäuren, wie "low surface area" oder hoch dispergierbare Kieselsäure, auch im Gemisch, zum Einsatz kommen. Besonders bevorzugt ist es, wenn eine fein verteilte, gefällte Kieselsäure verwendet wird, die eine CTAB-Oberfläche (gemäß ASTM D 3765) von 30 bis 350 m²/g, vorzugsweise von 110 bis 250 m²/g, aufweist. Als Kieselsäuren können sowohl konventionelle Kieselsäuren wie die des Typs VN3 der Firma Evonik als auch hoch dispergierbare Kieselsäuren, so genannte HD-Kieselsäuren (z. B. Ultrasil^{®} 7000 der Firma Evonik), zum Einsatz kommen.

Zur Verbesserung der Verarbeitbarkeit und zur Anbindung der Kieselsäure an den Dienkautschuk in kieselsäurehaltigen Mischungen wird vorzugsweise zumindest ein Silan-Kupplungsagens in Mengen von 1 - 15 phf (Gewichtsteile, bezogen auf 100 Gewichtsteile Kieselsäure) in der Kautschukmischung eingesetzt. Die Silan-Kupplungsagenzien können auch im Gemisch eingesetzt werden.

Die in dieser Schrift verwendete Angabe phf (parts per hundred parts of filler by weight) ist dabei die in der Kautschukindustrie gebräuchliche Mengenangabe für Kupplungsagenzien für Füllstoffe. Im Rahmen der vorliegenden Anmeldung bezieht sich phf auf die vorhandene Kieselsäure, das heißt, dass andere eventuell vorhandene Füllstoffe wie Ruß nicht in die Berechnung der Menge an Silan-Kupplungsagens mit eingehen.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagenzien z. B. 3-Mercaptopropyltriethoxysilan, 3-Thiocyanatopropyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT^{®} in verschiedenen Varianten von der Firma Momentive, USA, oder solche, die unter dem Namen VP Si 363 von der Firma Evonik Industries vertrieben werden. Einsetzbar sind auch sogenannte "silated core polysulfides" (SCP, Polysulfide mit silyliertem Kern), die z. B. in der US 20080161477 A1 und der EP 2 114 961 B1 beschrieben werden.

Vorzugsweise ist zumindest ein Silan-Kupplungsagens in der Kautschukmischung 3,3'-Bis(triethoxysilylpropyl)disulfid (TESPD).

Die Kautschukmischung kann außerdem weitere Füllstoffe, wie Ruße, Alumosilicate, Kreide, Stärke, Magnesiumoxid, Titandioxid, Kautschukgele, Kohlenstoffnanoröhrchen, Graphit, Graphene oder sogenannte "carbon-silica dualphase filler" in üblichen Mengen enthalten, wobei die Füllstoffe in Kombination eingesetzt werden können.

Ist in der Kautschukmischung Ruß enthalten, können alle dem Fachmann bekannten Ruß-Typen eingesetzt werden. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist. Hiermit werden für die Anwendung im Fahrzeugreifen besonders gute Rollwiderstandsindikatoren bei guten sonstigen Reifeneigenschaften erzielt.

Um die Kautschukmischungen im Hinblick auf die Dämpfung und damit auf Nassbremsen bei Verwendung als Reifenlaufstreifen zu verbessern, hat es sich als vorteilhaft erwiesen, wenn die Kautschukmischung 20 bis 60 phr zumindest eines Harzes aufweist. Als Harze kommen dabei z. B. Harze auf der Basis von Isopropenylbenzol, aromatische Kohlenwasserstoffharze, wie aromatische C9-Kohlenwasserstoffharze, aliphatische Kohlenwasserstoffharze, wie aliphatische C5-Kohlenwasserstoffharze, oder Cumeron-Inden-Harze in Frage. Die Harze können auch im Gemisch eingesetzt werden.

Um das Abriebverhalten und den Rollwiderstand weiter zu verbessern, hat es sich als vorteilhaft erwiesen, wenn zumindest ein Harz ein solches auf der Basis von Isopropenylbenzol ist. Harze auf der Basis von Isopropenylbenzol, auch AMS-Harze (α-Methylstyrol-Harze) genannt, fallen als Copolymere bei der Polymerisation der im Leichtöl des Steinkohlenteers enthaltenen ungesättigten Verbindungen an. Sie sind z. B. unter dem Namen Sylvatraxx^{®} 4401 von der Firma Kraton Chemicals SAS erhältlich.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) oder Zinkkomplexe wie z. B. Zinkethylhexanoat,
c) Wachse,
d) Mastikationshilfsmittel, wie z. B. 2,2'-Dibenzamidodiphenyldisulfid (DBD), und
e) Verarbeitungshilfsmittel, wie z.B. Fettsäuresalze, wie z.B. Zinkseifen, und Fettsäureester und deren Derivate.

Der Mengenanteil der Gesamtmenge an weiteren Zusatzstoffen beträgt 3 bis 150 phr, bevorzugt 3 bis 100 phr und besonders bevorzugt 5 bis 80 phr.

Die Vulkanisation der Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS).

Außerdem kann die Kautschukmischung Vulkanisationsverzögerer enthalten.

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe bestehend aus z. B. Thiuramdisulfiden, wie z. B. Tetrabenzylthiuramdisulfid (TBzTD), Tetramethylthiuramdisulfid (TMTD) oder Tetraethylthiuramdisulfid (TETD), Thiuramtetrasulfiden, wie z. B. Dipentamethylenthiuramtetrasulfid (DPTT), Dithiophosphaten, wie z. B. DipDis (Bis-(Diisopropyl)thiophosphoryldisulfid), Bis(O,O-2-ethylhexyl-thiophosphoryl)Polysulfid (z. B. Rhenocure SDT 50^{®}, Rheinchemie GmbH, Zinkdichloryldithiophosphat (z. B. Rhenocure ZDT/S^{®}, Rheinchemie GmbH) oder Zinkalkyldithiophosphat, und 1,6-Bis(N,N-dibenzylthiocarbamoyldithio)hexan und Diarylpolysulfiden und Dialkylpolysulfiden.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Das letztere System enthält ein Vulkanisationsmittel, welches mit einer Funktionalität größer vier vernetzt und zumindest einen Vulkanisationsbeschleuniger.

Der Kautschukmischung wird bei deren Herstellung bevorzugt wenigstens ein Vulkanisationsmittel ausgewählt aus der Gruppe bestehend aus Schwefel, Schwefelspender, Vulkanisationsbeschleuniger und Vulkanisationsmittel, die mit einer Funktionalität größer vier vernetzen, in der Fertigmischstufe zugegeben. Hierdurch lässt sich aus der gemischten Fertigmischung durch Vulkanisation eine schwefelvernetzte Kautschukmischung für die Anwendung in Gummiprodukten, insbesondere in Fahrzeugluftreifen, herstellen.

Die Begriffe "vulkanisiert" und "vernetzt" werden im Rahmen der vorliegenden Erfindung synonym verwendet.

Die Herstellung der Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z. B. durch einen Extrusionsvorgang weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die Kautschukmischung kann für unterschiedlichste Gummiprodukte eingesetzt werden. Vorzugsweise wird sie für die Herstellung von Fahrzeugluftreifen, wie PKW-, Van-, LKW- oder Zweiradreifen, verwendet, wobei die Kautschukmischung zumindest den mit der Fahrbahn in Berührung kommenden Teil des Laufstreifens bildet.

Bei einem Fahrzeugluftreifen kann der Laufstreifen aus einer einzigen Mischung bestehen, die gemäß der Erfindung ausgebildet ist. Häufig weisen Fahrzeugluftreifen heute jedoch einen Laufstreifen mit einer sogenannten Cap/Base-Konstruktion auf. Unter "Cap" wird dabei der mit der Fahrbahn in Berührung kommende Teil des Laufstreifens verstanden, der radial außen angeordnet ist (Laufstreifenoberteil oder Laufstreifencap). Unter "Base" wird dabei der Teil des Laufstreifens verstanden, der radial innen angeordnet ist, und somit im Fahrbetrieb nicht oder nur am Ende des Reifenlebens mit der Fahrbahn in Berührung kommt (Laufstreifenunterteil oder Laustreifenbase). Bei einem Fahrzeugluftreifen mit einer solchen Cap/Base-Konstruktion ist zumindest die Kautschukmischung für die Cap gemäß dem Anspruch 1 ausgebildet.

Der erfindungsgemäße Fahrzeugluftreifen kann auch einen Laufstreifen aufweisen, der aus verschiedenen nebeneinander und/oder untereinander angeordneten Laufstreifenmischungen besteht (Multikomponentenlaufstreifen).

Bei der Herstellung des Fahrzeugluftreifens wird die Mischung als Fertigmischung vor der Vulkanisation in die Form eines Laufstreifens, bevorzugt wenigstens in die Form einer Laufstreifencap, gebracht und bei der Herstellung des Fahrzeugreifenrohlings wie bekannt aufgebracht. Der Laufstreifen, bevorzugt wenigstens die Laufstreifencap, kann auch in Form eines schmalen Kautschukmischungsstreifens auf einen Reifenrohling aufgewickelt werden.

Von der Erfindung sind sämtliche vorteilhaften Ausgestaltungen, die sich unter anderem in den Patentansprüchen widerspiegeln, umfasst. Insbesondere sind von der Erfindung auch Ausgestaltungen umfasst, die sich durch Kombination unterschiedlicher Merkmale, beispielsweise von Bestandteilen der Kautschukmischung, unterschiedlicher Abstufungen bei der Bevorzugung dieser Merkmale ergeben, sodass auch eine Kombination eines ersten als "bevorzugt" bezeichneten Merkmals oder im Rahmen einer vorteilhaften Ausführungsform beschriebenen Merkmals mit einem weiteren als z. B. "besonders bevorzugt" bezeichneten Merkmal von der Erfindung erfasst ist.

Die Erfindung soll nun anhand von Vergleichs- und Ausführungsbeispielen, die gemäß einer ersten Mischreihe in der Tabelle 1 und gemäß einer zweiten Mischreihe in Tabelle 2 zusammengefasst sind, näher erläutert werden. Die Vergleichsmischungen sind dabei mit V, die erfindungsgemäße Mischung ist mit E gekennzeichnet.

Die Mischungsherstellung erfolgte nach den in der Kautschukindustrie üblichen Verfahren unter üblichen Bedingungen in drei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. In der zweiten Mischstufe wurde die Grundmischung nochmals durchmischt. Durch Zugabe des Vulkanisationssystems in der dritten Stufe (Fertigmischstufe) wurde die Fertigmischung erzeugt, wobei bei 90 bis 120 °C gemischt wurde.

Anschließend wurde der Verlustfaktor tan δ (10%) der Mischung mittels RPA (= *engl.* "rubber process analyzer") in Anlehnung an ASTM D6601 vom zweiten Dehnungsdurchlauf bei 1 Hz, 70°C und 10 % Dehnung im vulkanisierten, konditionierten Zustand ermittelt.

Ferner wurden aus sämtlichen Mischungen Prüfkörper durch 20-minütige Vulkanisation unter Druck bei 160 °C hergestellt und mit diesen Prüfkörpern für die Kautschukindustrie typische Materialeigenschaften mit den im Folgenden angegebenen Testverfahren ermittelt:
- Shore-A-Härte bei Raumtemperatur mittels Durometer gemäß DIN ISO 7619-1
- Rückprallelastizität bei Raumtemperatur und 70 °C gemäß DIN 53 512
- dynamischer Speichermodul E' bei 55 °C aus dynamisch-mechanischer Messung bei 55 °C gemäß DIN 53 513, Dehnungsdurchlauf (engl. "strain sweep") bei 8 % Dehnung
- maximaler Verlustfaktor tan δₘₐₓ (tangens delta max) aus dynamisch-mechanischer Messung bei 55 °C gemäß DIN 53 513, Dehnungsdurchlauf (engl. "strain sweep")
- Abrieb bei Raumtemperatur gemäß DIN/ISO 4649

Ein geringer Verlustfaktors tan δ (10%) korreliert dabei mit einem niedrigen Rollwiderstand. Ein hoher dynamischer Speichermodul E' steht für eine höhere Steifigkeit und somit für eine bessere Handlingperformance.

**Tabelle 1**

| Bestandteile | Einheit | 1(V) | 2(V) | 3(V) | 4(E) |
|---|---|---|---|---|---|
| Naturkautschuk | phr | 10 | 10 | 10 | 10 |
| high-cis BR ^{a} | phr | 30 | - | 30 | - |
| low-cis BR ^{b} | phr | - | 70 | - | 70 |
| SSBR ^{c} | phr | 60 | 20 | 60 | 20 |
| Ruß | phr | 5 | 5 | 5 | 5 |
| Kieselsäure | phr | 115 | 115 | 115 | 115 |
| Silan-Kupplungsagens | phr | 8 | 8 | 8 | 8 |
| Mineralölweichmacher^{d} | phr | 12,5 | 12,5 | - | - |
| Pflanzliches Öl^{e} | phr | - | - | 12,5 | 12,5 |
| Harz^{f} | phr | 40 | 40 | 40 | 40 |
| Alterungsschutzmittel | phr | 6 | 6 | 6 | 6 |
| Ozonschutzwachs | phr | 2 | 2 | 2 | 2 |
| Zinkoxid | phr | 2 | 2 | 2 | 2 |
| Stearinsäure | phr | 1 | 1 | 1 | 1 |
| Verarbeitungshilfsmittel | phr | 6 | 6 | 6 | 6 |
| Beschleuniger | phr | 4 | 4 | 4 | 4 |
| Schwefel | phr | 2 | 2 | 2 | 2 |

| Eigenschaften | | | | | |
|---|---|---|---|---|---|
| Tg_{(blend)} | °C | -75 | -82 | -75 | -82 |
| tan δ (10%) (RPA) | - | 0,1980 | 0,1920 | 0,2050 | 0,1910 |
| Shorehärte bei RT | ShoreA | 68,2 | 66,3 | 65,9 | 65,3 |
| Rückprallelast. bei RT | % | 20,6 | 25,2 | 21,6 | 27,0 |
| Rückprallelast. bei 70 °C | % | 42,0 | 44,7 | 41,6 | 43,7 |
| E' bei 8 % | MPa | 5,3 | 5,7 | 4,9 | 5,6 |
| tan δₘₐₓ (Eplexor) | - | 0,234 | 0,225 | 0,237 | 0,224 |
| Abrieb | mm³ | 56 | 49 | 61 | 49 |

| | | | | | |
|---|---|---|---|---|---|
| ^{a} Buna CB 1203, Arlanxeo, T_{g} = -105 °C, cis-Anteil > 95 % ^{b} Asaprene^{®} N103, Asahi, funktionalisierter, lösungspolymerisierter Butadienkautschuk mit Funktionalisierung für die Polymer/Kieselsäure-Wechselwirkung, T_{g} = -90 °C, cis-Anteil = 38,6 % ^{c} Sprintan^{®} SLR-3402, Trinseo, funktionalisiertes, lösungspolymerisiertes Styrol-Butadien-Copolymer mit Funktionalisierung für die Polymer/Kieselsäure- und die Polymer/Ruß-Wechselwirkung, T_{g} = -62 °C ^{d} TDAE (treated distillate aromatic extract) e Rapsöl ^{f} Sylvatraxx^{®} 4401, Kraton Chemicals SAS, Isopropenylbenzol-Harz, Erweichungspunkt = 85 °C (gemäß ASTM E 28) | | | | | |

Aus den Daten der Tabelle 1 wird ersichtlich, dass sich durch die kombinierte Anwesenheit des festen, lösungspolymerisierten Butadienkautschuks (BR, Polybutadien) mit einem cis-Anteil von 38,6 % mit 12,5 phr Rapsöl in der kieselsäurehaltigen Mischung 4(E) sowohl der Verlustfaktor tan δ (10 %) aus der Messung mittels RPA als auch der maximale Verlustfaktor tan δₘₐₓ bei 55 °C aus dynamisch-mechanischer Messung mittels Eplexor - beide als Maß für einen geringeren Rollwiderstand - verringern lassen. Dieser Effekt war aus den Einzelmaßnahmen, wie ihn die Mischungen 2(V) (nur geändertes Polymersystem) und 3(V) (nur Austausch des Weichmacheröls) zeigen, keinesfalls zu erwarten. Gleiches gilt für die Steifigkeit (E' bei 8 %) und den Abrieb. Die Werte der erfindungsgemäßen Mischung liegen überraschenderweise deutlich über jenen, die aus der Summe der Einzelmaßnahmen zu erwarten gewesen wären. Die hohe Steifigkeit lässt sich dabei mit einem guten Handlingverhalten bei Anwendung als Reifenlaufstreifen korrelieren.

**Tabelle 2**

| Bestandteile | Einheit | 5(V) | 6(V) | 7(V) | 8(E) |
|---|---|---|---|---|---|
| Naturkautschuk | phr | 10 | 10 | 10 | 10 |
| high-cis BR ^{a} | phr | 30 | - | 30 | - |
| low-cis BR ^{b} | phr | - | 90 | - | 90 |
| SSBR ^{c} | phr | 60 | - | 60 | - |
| Ruß | phr | 5 | 5 | 5 | 5 |
| Kieselsäure | phr | 115 | 115 | 115 | 115 |
| Silan-Kupplungsagens | phr | 8 | 8 | 8 | 8 |
| Mineralölweichmacher^{d} | phr | 12,5 | 12,5 | - | - |
| Pflanzliches Öl^{e} | phr | - | - | 12,5 | 12,5 |
| Harz^{f} | phr | 40 | 40 | 40 | 40 |
| Alterungsschutzmittel | phr | 6 | 6 | 6 | 6 |
| Ozonschutzwachs | phr | 2 | 2 | 2 | 2 |
| Zinkoxid | phr | 2 | 2 | 2 | 2 |
| Stearinsäure | phr | 1 | 1 | 1 | 1 |
| Verarbeitungshilfsmittel | phr | 6 | 6 | 6 | 6 |
| Beschleuniger | phr | 3,7 | 3,7 | 3,7 | 3,7 |
| Schwefel | phr | 1,5 | 1,5 | 1,5 | 1,5 |

| Eigenschaften | | | | | |
|---|---|---|---|---|---|
| Tg_{(blend)} | °C | -75 | -88 | -75 | -88 |
| tan δ (10%) | - | 0,232 | 0,199 | 0,230 | 0,194 |
| Shorehärte bei RT | ShoreA | 64 | 64 | 63 | 63 |
| Rückprallelast. bei RT | % | 21 | 28 | 22 | 31 |
| Rückprallelast. bei 70 °C | % | 40 | 46 | 39 | 46 |
| E' bei 8 % | MPa | 4,9 | 5,8 | 4,8 | 5,6 |
| tan δₘₐₓ (Eplexor) | - | 0,261 | 0,237 | 0,263 | 0,230 |
| Abrieb | mm³ | 87 | 43 | 102 | 40 |

| | | | | | |
|---|---|---|---|---|---|
| ^{a} Buna CB 1203, Arlanxeo, T_{g} = -105 °C, cis-Anteil > 95 % ^{b} Asaprene^{®} N103, Asahi, funktionalisierter, lösungspolymerisierter Butadienkautschuk mit Funktionalisierung für die Polymer/Kieselsäure-Wechselwirkung, T_{g} = -90 °C, cis-Anteil = 38,6 % ^{c} Sprintan^{®} SLR-3402, Trinseo, funktionalisiertes, lösungspolymerisiertes Styrol-Butadien-Copolymer mit Funktionalisierung für die Polymer/Kieselsäure- und die Polymer/Ruß-Wechselwirkung, T_{g} = -62 °C ^{d} TDAE (treated distillate aromatic extract) ^{e} Rapsöl ^{f} Sylvatraxx^{®} 4401, Kraton Chemicals SAS, Isopropenylbenzol-Harz, Erweichungspunkt = 85 °C (gemäß ASTM E 28) | | | | | |

Aus den Daten der Tabelle 2 wird ersichtlich, dass sich durch die kombinierte Anwesenheit des festen, lösungspolymerisierten Butadienkautschuks (BR, Polybutadien) mit einem cis-Anteil von 38,6 % in einer Menge von 90 phr mit 12,5 phr Rapsöl in der kieselsäurehaltigen Mischung 8(E) sowohl der Verlustfaktor tan δ (10 %) aus der Messung mittels RPA als auch der maximale Verlustfaktor tan δₘₐₓ bei 55 °C aus dynamisch-mechanischer Messung mittels Eplexor - beide als Maß für einen geringeren Rollwiderstand - verringern lassen. Dieser Effekt war aus den Einzelmaßnahmen, wie ihn die Mischungen 6(V) (nur geändertes Polymersystem) und 7(V) (nur Austausch des Weichmacheröls) zeigen, keinesfalls zu erwarten. Gleiches gilt für den Abrieb. Die erfindungsgemäße Mischung zeigt einen deutlich geringeren Abrieb, als dies aus der Summe der Einzelmaßnahmen zu erwarten gewesen wäre.

## Patentansprüche

1. Schwefelvernetzbare Kautschukmischung, insbesondere für den Laufstreifen von Fahrzeugluftreifen, enthaltend wenigstens folgende Bestandteile:
- 50 bis 100 phr (Gewichtsteile, bezogen auf 100 Gewichtsteile der gesamten Kautschuke in der Mischung) zumindest eines festen, lösungspolymerisierten Butadienkautschuks (BR) mit einem cis-Anteil von weniger als 90 Gew.-%,
- bis zu 20 phr zumindest eines natürlichen Polyisoprens (NR),
- bis zu 40 phr zumindest eines lösungspolymerisierten Styrol-Butadien-Kautschuks (SSBR),
- 5 bis 50 phr zumindest eines Weichmachers, der kein Mineralölweichmacher ist, und
- 10 bis 300 phr zumindest einer Kieselsäure.

2. Schwefelvernetzbare Kautschukmischung nach Anspruch 1, **dadurch gekennzeichnet, dass** der zumindest eine feste, lösungspolymerisierte Butadienkautschuk einen cis-Anteil zwischen 20 und 50 Gew.-% aufweist.

3. Schwefelvernetzbare Kautschukmischung nach Anspruch 1 oder 2, **dadurch gekennzeichnet, dass** der zumindest eine feste, lösungspolymerisierte Butadienkautschuk mit einer Gruppe funktionalisiert ist, die eine Wechselwirkung mit der Kieselsäure ermöglicht.

4. Schwefelvernetzbare Kautschukmischung nach zumindest einem der vorhergehenden Ansprüche, enthaltend wenigstens folgende Bestandteile:
- 60 bis 95 phr zumindest eines festen, lösungspolymerisierten Butadienkautschuks (BR) mit einem cis-Anteil von weniger als 90 Gew.-%,
- 5 bis 15 phr zumindest eines natürlichen Polyisoprens (NR) und
- 10 bis 30 phr zumindest eines lösungspolymerisierten Styrol-Butadien-Kautschuks (SSBR).

5. Schwefelvernetzbare Kautschukmischung nach zumindest einem der vorhergehenden Ansprüche, **dadurch gekennzeichnet, dass** die Kautschuke in der Mischung zusammen eine Blend-Glasübergangstemperatur Tg_{(blend)} gemäß DSC nach **DIN** 53765: 1994-03 bzw. ISO 11357-2: 1999-03 von -90 bis -77 °C aufweisen.

6. Schwefelvernetzbare Kautschukmischung nach zumindest einem der vorhergehenden Ansprüche, **dadurch gekennzeichnet, dass** sie 5 bis 30 phr zumindest eines Weichmachers aufweist, der kein Mineralölweichmacher ist.

7. Schwefelvernetzbare Kautschukmischung nach zumindest einem der vorhergehenden Ansprüche, **dadurch gekennzeichnet, dass** der zumindest eine Weichmacher, der kein Mineralölweichmacher ist, ein pflanzliches Öl ist.

8. Schwefelvernetzbare Kautschukmischung nach Anspruch 7, **dadurch gekennzeichnet, dass** das pflanzliche Öl Rapsöl ist.

9. Schwefelvernetzbare Kautschukmischung nach zumindest einem der vorhergehenden Ansprüche, **dadurch gekennzeichnet, dass** sie 50 bis 200 phr Kieselsäure enthält.

10. Schwefelvernetzbare Kautschukmischung nach zumindest einem der vorhergehenden Ansprüche, **dadurch gekennzeichnet, dass** sie 1 - 15 phf (Gewichtsteile, bezogen auf 100 Gewichtsteile Kieselsäure) zumindest eines Silan-Kupplungsagenzes enthält.

11. Schwefelvernetzbare Kautschukmischung nach Anspruch 10, **dadurch gekennzeichnet, dass** zumindest ein Silan-Kupplungsagens 3,3'-Bis(triethoxysilylpropyl)disulfid (TESPD) ist.

12. Schwefelvernetzbare Kautschukmischung nach zumindest einem der vorhergehenden Ansprüche, **dadurch gekennzeichnet, dass** sie 20 bis 60 phr zumindest eines Harzes aufweist.

13. Schwefelvernetzbare Kautschukmischung nach Anspruch 12, **dadurch gekennzeichnet, dass** zumindest ein Harz ein solches auf der Basis von Isopropenylbenzol ist.

14. Fahrzeugluftreifen mit einem Laufstreifen, dessen zumindest mit der Fahrbahn in Berührung kommender Teil aus einer mit Schwefel vulkanisierten Kautschukmischung nach einem der Ansprüche 1 bis 13 besteht.

## Claims

1. Sulfur-crosslinkable rubber mixture, especially for the tread of pneumatic vehicle tyres, containing at least the following constituents:
- 50 to 100 phr (parts by weight, based on 100 parts by weight of all rubbers in the mixture) of at least one solid, solution-polymerized butadiene rubber (BR) having a cis content of less than 90% by weight,
- up to 20 phr of at least one natural polyisoprene (NR),
- up to 40 phr of at least one solution-polymerized styrene-butadiene rubber (SSBR),
- 5 to 50 phr of at least one plasticizer which is not a mineral oil plasticizer, and
- 10 to 300 phr of at least one silica.

2. Sulfur-crosslinkable rubber mixture according to Claim 1, **characterized in that** the at least one solid, solution-polymerized butadiene rubber has a cis content between 20% and 50% by weight.

3. Sulfur-crosslinkable rubber mixture according to Claim 1 or 2, **characterized in that** the at least one solid, solution-polymerized butadiene rubber is functionalized with a group that allows interaction with the silica.

4. Sulfur-crosslinkable rubber mixture according to at least one of the preceding claims, containing at least the following constituents:
- 60 to 95 phr of at least one solid, solution-polymerized butadiene rubber (BR) having a cis content of less than 90% by weight,
- 5 to 15 phr of at least one natural polyisoprene (NR) and
- 10 to 30 phr of at least one solution-polymerized styrene-butadiene rubber (SSBR).

5. Sulfur-crosslinkable rubber mixture according to at least one of the preceding claims, **characterized in that** the rubbers in the mixture together exhibit a blend glass transition temperature Tg_{(blend)} by DSC according to **DIN** 53765: 1994-03 or ISO 11357-2: 1999-03 of -90°C to -77°C.

6. Sulfur-crosslinkable rubber mixture according to at least one of the preceding claims, **characterized in that** it contains 5 to 30 phr of at least one plasticizer which is not a mineral oil plasticizer.

7. Sulfur-crosslinkable rubber mixture according to at least one of the preceding claims, **characterized in that** the at least one plasticizer which is not a mineral oil plasticizer is a vegetable oil.

8. Sulfur-crosslinkable rubber mixture according to Claim 7, **characterized in that** the vegetable oil is rapeseed oil.

9. Sulfur-crosslinkable rubber mixture according to at least one of the preceding claims, **characterized in that** it contains 50 to 200 phr of silica.

10. Sulfur-crosslinkable rubber mixture according to at least one of the preceding claims, **characterized in that** it contains 1-15 phf (parts by weight, based on 100 parts by weight of silica) of at least one silane coupling agent.

11. Sulfur-crosslinkable rubber mixture according to Claim 10, **characterized in that** at least one silane coupling agent is 3,3'-bis(triethoxysilylpropyl)disulfide (TESPD).

12. Sulfur-crosslinkable rubber mixture according to at least one of the preceding claims, **characterized in that** it contains 20 to 60 phr of at least one resin.

13. Sulfur-crosslinkable rubber mixture according to Claim 12, **characterized in that** at least one resin is one based on isopropenylbenzene.

14. Pneumatic vehicle tyre having a tread which at least in its roadway-contacting portion consists of a sulfur-vulcanized rubber mixture according to any of Claims 1 to 13.

## Revendications

1. Mélange de caoutchouc réticulable au soufre, en particulier pour la bande de roulement de pneumatiques de véhicule, contenant au moins des constituants suivants :
- 50 à 100 phr (parties en poids, par rapport à 100 parties en poids de l'ensemble des caoutchoucs dans le mélange) d'au moins un caoutchouc butadiène (BR) solide polymérisé en solution avec une teneur en cis inférieure à 90 % en poids,
- jusqu'à 20 phr d'au moins un polyisoprène naturel (NR),
- jusqu'à 40 phr d'au moins un caoutchouc de styrène-butadiène (SSBR) polymérisé en solution,
- 5 à 50 phr d'au moins un plastifiant, qui n'est pas un plastifiant à base d'huile minérale, et
- 10 à 300 phr d'au moins un acide silicique.

2. Mélange de caoutchouc réticulable au soufre selon la revendication 1, **caractérisé en ce que** l'au moins un caoutchouc de butadiène solide polymérisé en solution présente une teneur en cis entre 20 et 50 % en poids.

3. Mélange de caoutchouc réticulable au soufre selon la revendication 1 ou 2, **caractérisé en ce que** l'au moins un caoutchouc de butadiène solide polymérisé en solution est fonctionnalisé avec un groupe qui permet une interaction avec l'acide silicique.

4. Mélange de caoutchouc réticulable au soufre selon au moins l'une des revendications précédentes, contenant au moins des constituants suivants :
- 60 à 95 phr d'au moins un caoutchouc butadiène (BR) solide polymérisé en solution avec une teneur en cis inférieure à 90 % en poids,
- 5 à 15 phr d'au moins un polyisoprène naturel (NR) et
- 10 à 30 phr d'au moins un caoutchouc de styrène-butadiène (SSBR) polymérisé en solution.

5. Mélange de caoutchouc réticulable au soufre selon au moins l'une des revendications précédentes, **caractérisé en ce que** les caoutchoucs dans le mélange présentent ensemble une température de transition vitreuse mixte Tg_{(blend)} selon l'analyse de calorimétrie différentielle par balayage (DSC) selon la norme **DIN** 53765: 1994-03 et/ou ISO 11357-2 : 1999-03 de -90 à -77 °C.

6. Mélange de caoutchouc réticulable au soufre selon au moins l'une des revendications précédentes, **caractérisé en ce qu'**il présente de 5 à 30 phr d'au moins un plastifiant, qui n'est pas un plastifiant à base d'huile minérale.

7. Mélange de caoutchouc réticulable au soufre selon au moins l'une des revendications précédentes, **caractérisé en ce que** l'au moins un plastifiant, qui n'est pas un plastifiant à base d'huile minérale, est une huile végétale.

8. Mélange de caoutchouc réticulable au soufre selon la revendication 7, **caractérisé en ce que** l'huile végétale est de l'huile de colza.

9. Mélange de caoutchouc réticulable au soufre selon au moins l'une des revendications précédentes, **caractérisé en ce qu'**il contient de 50 à 200 phr d'acide silicique.

10. Mélange de caoutchouc réticulable au soufre selon au moins l'une des revendications précédentes, **caractérisé en ce qu'**il contient 1 - 15 phf (parties en poids, par rapport à 100 parties en poids d'acide silicique) d'au moins un agent de couplage de type silane.

11. Mélange de caoutchouc réticulable au soufre selon la revendication 10, **caractérisé en ce qu'**au moins un agent de coupe de type silane est du 3,3'-bis(triéthoxysilylpropyl)disulfure (TESPD).

12. Mélange de caoutchouc réticulable au soufre selon au moins l'une des revendications précédentes, **caractérisé en ce qu'**il contient de 20 à 60 phr d'au moins une résine.

13. Mélange de caoutchouc réticulable au soufre selon la revendication 12, **caractérisé en ce qu'**au moins une résine est une résine à base d'isopropénylbenzène.

14. Pneumatique de véhicule avec une bande de roulement dont au moins une partie entrant en contact avec la voie de circulation est constituée d'un mélange de caoutchouc vulcanisé au soufre selon l'une des revendications 1 à 13.
